(19) Europäisches Patentamt
European Patent Office
Office européen des brevets

(11) **EP 4 700 637 A1**

(12) **EUROPEAN PATENT APPLICATION**
published in accordance with Art. 153(4) EPC

(43) Date of publication:
**25.02.2026   Bulletin 2026/09**

(51) International Patent Classification (IPC):
**G06F 30/27** (2020.01)          **G06F 18/214** (2023.01)
**G06F 119/04** (2020.01)

(21) Application number: 24892730.3

(22) Date of filing: **29.05.2024**

(86) International application number:
**PCT/CN2024/096053**

(87) International publication number:
**WO 2025/107565 (30.05.2025 Gazette 2025/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **23.11.2023   CN 202311575649**

(71) Applicant: CRRC Changchun Railway Vehicles
Co., Ltd.
Changchun, Jilin 130000 (CN)

(72) Inventors:
• LIU, Changqing
  Changchun, Jilin 130000 (CN)
• SHAO, Qing
  Changchun, Jilin 130000 (CN)
• HU, Hao
  Changchun, Jilin 130000 (CN)
• LI, Kai
  Changchun, Jilin 130000 (CN)

(74) Representative: Lorenz Seidler Gossel Part. mbB
Widenmayerstr. 23
80538 München (DE)

(54) **METHOD AND APPARATUS FOR PREDICTING SERVICE LIFE OF SUPERCONDUCTING MAGNET**

(57)    Disclosed in the present application are a method and apparatus for predicting the service life of a superconducting magnet. The method comprises: collecting temperature data of a superconducting magnet, and determining a first service life parameter of the superconducting magnet on the basis of the temperature data (S101); collecting magnetic field intensity data of the superconducting magnet, and determining a second service life parameter of the superconducting magnet on the basis of the magnetic field intensity data (S102); collecting air pressure data of the superconducting magnet, and determining a third service life parameter of the superconducting magnet on the basis of the air pressure data (S103); and performing prediction on the basis of the first service life parameter, the second service life parameter and the third service life parameter, so as to obtain the service life of the superconducting magnet (S104). In the present application, by means of obtaining service life prediction data of a superconducting magnet from different physical fields, a prediction result is more accurate and thus more suitable for predicting the service life of a superconducting magnet of a high-temperature superconducting electrodynamic suspension train in an offline state.

Acquire temperature data of a superconducting magnet and determine a first service life parameter of the superconducting magnet based on the temperature data — S101

Acquire magnetic field intensity data of the superconducting magnet and determine a second service life parameter of the superconducting magnet based on the magnetic field intensity data — S102

Acquire air pressure data of the superconducting magnet and determine a third service life parameter of the superconducting magnet based on the air pressure data — S103

Predict the service life of the superconducting magnet based on the first service life parameter, the second service life parameter, and the third service life parameter — S104

**FIG. 1**

Processed by Luminess, 75001 PARIS (FR)

**Description**

**CROSS REFERENCE OF RELATED APPLICATION**

This application claims the priority to Chinese Patent Application No. 202311575649.1, titled "METHOD AND APPARATUS FOR PREDICTING SERVICE LIFE OF SUPERCONDUCTING MAGNET", filed on November 23, 2023 with the China National Intellectual Property Administration, which is incorporated herein by reference in its entirety.

**FIELD**

The present disclosure relates to the technical field of data processing, and in particular to a method and an apparatus for predicting a service life of a superconducting magnet.

**BACKGROUND**

A high-temperature superconducting electrodynamic suspension train requires a superconducting magnet to maintain a superconducting state and generate a strong electromagnetic field, enabling suspension, traction, and guidance of the train. An offline operation mode refers to an operation mode in which a power supply is disconnected, vacuum pumping is stopped, and a refrigerator is deactivated during operation of the train. In the offline operation mode, energy consumption is greatly reduced, and operation safety of the train is improved. However, to apply the offline operation mode, strict requirements are put forward for predicting a service life of the superconducting magnet in a superconducting state.

**SUMMARY**

In view of the above issues, a method and an apparatus for predicting a service life of a superconducting magnet are provided according to the present disclosure, to improve the accuracy of predicting the service life of a superconducting magnet for a high-temperature superconducting electrodynamic suspension train in an offline state.
To achieve the above objective, technical solutions are provided in the present disclosure as follows.
A method for predicting a service life of a superconducting magnet is provided. The method includes: acquiring temperature data of the superconducting magnet and determining a first service life parameter of the superconducting magnet based on the temperature data; acquiring magnetic field intensity data of the superconducting magnet and determining a second service life parameter of the superconducting magnet based on the magnetic field intensity data; acquiring air pressure data of the superconducting magnet and determining a third service life parameter of the superconducting magnet based on the air pressure data; and predicting the service life of the superconducting magnet based on the first service life parameter, the second service life parameter, and the third service life parameter.
In an embodiment, the method further includes: extracting the temperature data corresponding to the superconducting magnet from test data of the superconducting magnet and establishing a temperature dataset, where the temperature data is acquired to represent temperature variations over time during an entire process from a start to an end of an offline operation of the superconducting magnet; performing sensitivity analysis on the temperature data in the temperature dataset to determine an initial training sample set of the temperature data; normalizing the temperature data in the initial training sample set to obtain a target training sample set; and performing training based on the target training sample set to obtain a service life prediction model based on the temperature data. The determining a first service life parameter of the superconducting magnet based on the temperature data includes: processing the temperature data by using the service life prediction model based on the temperature data to obtain the first service life parameter.
In an embodiment, the performing sensitivity analysis on the temperature data in the temperature dataset to determine an initial training sample set of the temperature data includes: determining influence parameters of the temperature data acquired at different positions at the same time instant in the temperature dataset on the service life of the superconducting magnet; and determining a target temperature acquisition position based on the influence parameters and determining the temperature data acquired at the target temperature acquisition position as the initial training sample set.
In an embodiment, the method further includes: extracting the magnetic field intensity data corresponding to the superconducting magnet from test data of the superconducting magnet and establishing a magnetic field intensity dataset, where the magnetic field intensity data is acquired to represent variations of magnetic field intensity over time during an entire process from a start to an end of an offline operation of the superconducting magnet; performing sensitivity analysis on the magnetic field intensity data in the magnetic field intensity dataset to determine an initial training sample set of the magnetic field intensity data; normalizing the magnetic field intensity data in the initial training sample set to obtain a target training sample set; and performing training based on the target training sample set to obtain a service life prediction model based on the magnetic field intensity data. The determining a second service life parameter of the superconducting magnet based on the magnetic field intensity data includes: processing the magnetic field intensity data by using the service life prediction model based on the magnetic field intensity data to obtain the second service life parameter.

In an embodiment, the method further includes: extracting the air pressure data corresponding to the superconducting magnet from test data of the superconducting magnet and establishing an air pressure dataset, where the air pressure data is acquired to represent variations of air pressure over time during an entire process from a start to an end of an offline operation of the superconducting magnet; performing sensitivity analysis on the air pressure data in the air pressure dataset to determine an initial training sample set of the air pressure data; normalizing the air pressure data in the initial training sample set to obtain a target training sample set; and performing training based on the target training sample set to obtain a service life prediction model based on the air pressure data. The determining a third service life parameter of the superconducting magnet based on the air pressure data includes: processing the air pressure data by using the service life prediction model based on the air pressure data to obtain the third service life parameter.

In an embodiment, the predicting the service life of the superconducting magnet based on the first service life parameter, the second service life parameter, and the third service life parameter includes: determining influence degree parameters of the temperature data, the magnetic field intensity data, and the air pressure data on the service life of the superconducting magnet; determining a weight coefficient based on the influence degree parameters; and calculating the first service life parameter, the second service life parameter, and the third service life parameter by using the weight coefficient, to obtain the service life of the superconducting magnet.

An apparatus for predicting a service life of a superconducting magnet is provided. The apparatus includes: a first determination unit, a second determination unit, a third determination unit and a prediction unit.

The first determination unit is configured to acquire temperature data of the superconducting magnet and determine a first service life parameter of the superconducting magnet based on the temperature data.

The second determination unit is configured to acquire magnetic field intensity data of the superconducting magnet and determine a second service life parameter of the superconducting magnet based on the magnetic field intensity data.

The third determination unit is configured to acquire air pressure data of the superconducting magnet and determine a third service life parameter of the superconducting magnet based on the air pressure data.

The prediction unit is configured to predict the service life of the superconducting magnet based on the first service life parameter, the second service life parameter, and the third service life parameter.

In an embodiment, the apparatus further includes: a first model establishment unit. The first model establishment unit is configured to: extract the temperature data corresponding to the superconducting magnet from test data of the superconducting magnet and establish a temperature dataset, where the temperature data is acquired to represent temperature variations over time during an entire process from a start to an end of an offline operation of the superconducting magnet; perform sensitivity analysis on the temperature data in the temperature dataset to determine an initial training sample set of the temperature data; normalize the temperature data in the initial training sample set to obtain a target training sample set; and perform training based on the target training sample set to obtain a service life prediction model based on the temperature data. The first determination unit is further configured to process the temperature data by using the service life prediction model based on the temperature data to obtain the first service life parameter.

In an embodiment, the apparatus further includes: a second model establishment unit. The second model establishment unit is configured to: extract the magnetic field intensity data corresponding to the superconducting magnet from test data of the superconducting magnet and establish a magnetic field intensity dataset, where the magnetic field intensity data is acquired to represent variations of magnetic field intensity over time during an entire process from a start to an end of an offline operation of the superconducting magnet; perform sensitivity analysis on the magnetic field intensity data in the magnetic field intensity dataset to determine an initial training sample set of the magnetic field intensity data; normalize the magnetic field intensity data in the initial training sample set to obtain a target training sample set; and perform training based on the target training sample set to obtain a service life prediction model based on the magnetic field intensity data. The second determination unit is further configured to process the magnetic field intensity data by using the service life prediction model based on the magnetic field intensity data to obtain the second service life parameter.

In an embodiment, the apparatus further includes: a third model establishment unit. The third model establishment unit is configured to: extract the air pressure data corresponding to the superconducting magnet from test data of the superconducting magnet and establish an air pressure dataset, where the air pressure data is acquired to represent variations of air pressure over time during an entire process from a start to an end of an offline operation of the superconducting magnet; perform sensitivity analysis on the air pressure data in the air pressure dataset to determine an initial training sample set of the air pressure data; normalize the air pressure data in the initial training sample set to obtain a target training sample set; and perform training based on the target training sample set to obtain a service life prediction model based on the air pressure data. The third determination unit is further configured to: process the air pressure data by using the service life prediction model based on the air pressure data to obtain the third service life parameter.

A method and an apparatus for predicting a service life of a superconducting magnet are provided according to the present disclosure. The method includes: acquiring temperature data of the superconducting magnet and determining a first service life parameter of the superconducting magnet based on the temperature data; acquiring magnetic field intensity data of the superconducting magnet and determining a second service life parameter of the superconducting magnet based on the magnetic field intensity data; acquiring air pressure data of the superconducting magnet and determining a third service life parameter of the superconducting magnet based on the air pressure data; and predicting the service life of the superconducting magnet based on the first service life parameter, the second service life parameter, and the third service life parameter. Compared to the related technology, a more accurate prediction result can be obtained in the present disclosure by acquiring data for predicting the service life of the superconducting magnet from different physical fields, and the method according to the present disclosure is more applicable for predicting the service life of the superconducting magnet for a high-temperature superconducting electrodynamic suspension train in an offline state.

## BRIEF DESCRIPTION OF THE DRAWINGS

For clearly illustrating technical solutions in the embodiments of the present disclosure or the related technology, drawings referred to describe the embodiments or the related technology are briefly described hereinafter. Apparently, the drawings in the following description are only some embodiments of the present disclosure, and for those skilled in the art, other drawings may be obtained based on these drawings without any creative efforts.

FIG. 1 is a flowchart of a method for predicting a service life of a superconducting magnet according to an embodiment of the present disclosure;

FIG. 2 is a schematic diagram showing an application of a temperature sensor according to an embodiment of the present disclosure;

FIG. 3 is a schematic diagram of predicting a service life based on a model according to an embodiment of the present disclosure;

FIG. 4 is a schematic diagram showing processing of a POS algorithm according to an embodiment of the present disclosure; and

FIG. 5 is a schematic structural diagram of an apparatus for predicting a service life of a superconducting magnet according to an embodiment of the present disclosure.

## DETAILED DESCRIPTION

Hereinafter technical solutions in embodiments of the present disclosure are described clearly and completely in conjunction with the drawings in the embodiments of the present disclosure. Apparently, the described embodiments are only some rather than all of the embodiments of the present disclosure. Based on the embodiments of the present disclosure, all other embodiments obtained by those skilled in the art without any creative effort fall into the protection scope of the present disclosure.

The terms such as "first", "second" and the like in the specification, claims, and the drawings of the present disclosure are intended to distinguish different objects rather than describe a particular sequence. Moreover, the terms "comprise", "include", and any variations thereof are intended to cover non-exclusive inclusion. For example, a process, method, system, product, or device that includes a series of steps or units is not limited to the listed steps or units, but may include steps or units that are not listed.

To facilitate the description of the embodiments of the present disclosure, relevant terms of the present disclosure are described as follows.

Superconducting magnet refers to an electromagnet with a coil made of a type-II superconductor that exhibits a high transition temperature and an exceptionally high critical magnetic field in an ultra-low temperature treatment. The superconducting magnet also serves as a component for providing power for a superconducting electrodynamic suspension train.

Ultra-low temperature treatment refers to refrigeration by using a liquid nitrogen device at an operating temperature at -180°C, around -200°C.

Ultra-strong magnetic field refers to a magnetic field with a strength greater than 5T (Tesla) generated by using superconducting technology. An ultra-high-intensity magnetic field generated by using pulse technology, hybrid magnet technology, or ultra-high-power electromagnet technology is also included.

High vacuum refers to a vacuum degree below $1.333 \times 10^{-1}$ to $1.333 \times 10^{-6}$ Pa.

Traction force (also known as suspension force or guiding force) refers to an electromagnetic force generated by repulsion between the superconducting magnet and a magnetic field of a ground traction coil or a figure-8 coil.

High-temperature superconducting electromagnetic suspension train refers to a novel vehicle that combines high-temperature superconducting technology with magnetic suspension technology. The vehicle introduces a large current and generates a strong magnetic field based on a zero-resistance property of high-temperature superconducting materials, and a contactless transportation manner supported, guided, and propelled by magnetic forces is achieved through interaction between an on-vehicle superconducting magnet and a magnetic field of the ground coil.

Offline operation refers to an operation mode in which a power supply is disconnected, vacuum pumping is stopped, and a refrigerator is deactivated during operation of a train.

Quenching: Superconductors have three fundamental characteristics of zero-resistance property, the Meissner effect, and the Josephson effect. A critical temperature, a critical magnetic field, and a critical current are three important parameters for superconductors. Quenching refers to a process that a superconducting magnet is subject to phase transition and reverts to a normal conductor in a case that any of parameters including a temperature, a magnetic field and a current exceeds its critical value. When an operating temperature of the superconductor remains constant, the superconductor can only stably revert to a superconducting state if a current flowing through it drops below a recovery current. Energy released from the magnet during quenching may cause the local temperature of the magnet to rise rapidly. An excessive rise in temperature may damage an internal structure of the superconductor or even burn out the magnet. Safety analysis of the magnet after quenching requires solving a transition process of quenching, including current attenuation, temperature variations, and voltage variations in the magnet, thereby estimating a thermal shock and a voltage shock on the magnet during the quenching. In this way, the magnet design can be evaluated in terms of strength and uniformity of the magnetic field, thereby providing a basis for structural design and process design of the magnet.

Sensitivity analysis refers to a method for studying and analyzing sensitivity of the state or output of a system (or model) with respect to variations in system parameters or surrounding conditions. In optimization methods, the sensitivity analysis is often used to study the stability of an optimal solution in a case that original data is inaccurate or changed. In addition, through the sensitivity analysis, which parameters have a great influence on the system or the model can be determined.

PSO-CNN multivariate regression training prediction model: PSO stands for Particle Swarm Optimization, which is a population-based stochastic optimization technique. A particle swarm algorithm imitates the swarming behavior of insects, animals, birds and fish. These swarms search for food in a cooperative way, and each member of the swarm constantly changes its search mode by learning from its own experience and that of other members. The PSO-CNN multivariate regression training prediction model constructs a regression model for data training and analysis through a Particle Swarm Optimization-Convolutional Neural Network (PSO-CNN) algorithm.

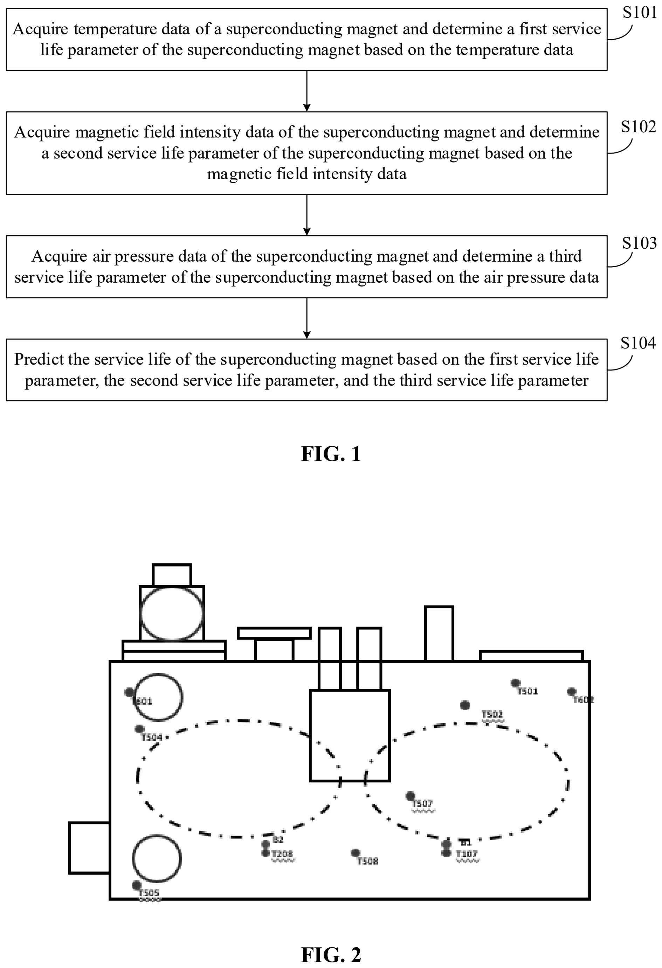

A method for predicting a service life of a superconducting magnet according to an embodiment of the present disclosure is mainly applied to a high-temperature superconducting electrodynamic suspension train. To maintain a superconducting state of a superconducting magnet in the high-temperature superconducting electrodynamic suspension train, conditions of an ultra-low temperature, a strong magnetic field, and high vacuum are required. Therefore, parameters for predicting the service life of a superconducting magnet which are acquired from different physical fields are required, to achieve an accurate prediction of the service life. Reference is made to FIG. 1, which is a flowchart of a method for predicting a service life of a superconducting magnet according to an embodiment of the present disclosure. The method may include the following steps S101 to S104.

In step S101, temperature data of the superconducting magnet is acquired and a first service life parameter of the superconducting magnet is determined based on the temperature data.

The temperature data includes a temperature of a coil of the superconducting magnet, a temperature of a cooling structure, and a temperature of a nitrogen fixation cavity. The temperature data may be acquired using a temperature sensor (as shown in FIG. 2). Specifically, temperature data at a current time instant may be obtained. Then, the service life of the superconducting magnet is predicted based on the acquired temperature data, to obtain the first service life parameter. The first service life parameter represents an applicable service life of the superconducting magnet predicted based on the currently measured temperature data. In an embodiment, the prediction of the first service life parameter of the superconducting magnet may be performed through a pre-established prediction model based on the temperature data. The prediction model may be obtained by training based on existing data of the superconducting magnet.

In step S102, magnetic field intensity data of the superconducting magnet is acquired and a second service life parameter of the superconducting magnet is determined based on the magnetic field intensity data.

The magnetic field intensity data may be acquired by a magnetic field sensor installed on an outer cryostat at different positions of the superconducting magnet at different time instants. Then, the service life of the superconducting magnet is predicted based on the acquired magnetic field intensity data, to obtain a second service life parameter. The second service life parameter represents an applicable service life of the superconducting magnet predicted based on the currently measured magnetic field intensity data. In an embodiment, the prediction of the second service life parameter of the superconducting magnet may be performed through a pre-established prediction model based on the magnetic field intensity data. The prediction model may be obtained by training based on existing magnetic field intensity data of the superconducting magnet.

In step S103, air pressure data of the superconducting magnet is acquired and a third service life parameter of the superconducting magnet is determined based on the air pressure data.

The air pressure data is sourced from an air pressure in a vacuum-pumped region between the outer cryostat and the nitrogen fixation cavity. Then, the service life of the superconducting magnet is predicted based on the acquired air pressure data, to obtain a third service life parameter. The third service life parameter represents an applicable service life of the superconducting magnet predicted based on the currently measured air pressure data. In an embodiment, the prediction of the third service life parameter of the superconducting magnet may be performed through a pre-established prediction model based on the air pressure data. The prediction model may be obtained by training based on existing air pressure data of the superconducting magnet.

In step S104, a service life of the superconducting magnet is predicted based on the first service life parameter, the second service life parameter, and the third service life parameter.

The service life of the superconducting magnet may be predicted based on respective influence degrees of the temperature data corresponding to the first service life parameter, the magnetic field intensity data corresponding to the second service life parameter, and the air pressure data corresponding to the third service life parameter on the service life. For example, the service life of the superconducting magnet is obtained through weighting calculation based on empirical data. In an embodiment, the predicting the service life of the superconducting magnet based on the first service life parameter, the second service life parameter, and the third service life parameter includes: determining influence degree parameters of the temperature data, the magnetic field intensity data, and the air pressure data on the service life of the superconducting magnet; determining a weight coefficient based on the influence degree parameters; and calculating the first service life parameter, the second service life parameter and the third service life parameter by using the weight coefficient, to obtain the service life of the superconducting magnet.

For example, the first service life parameter is represented as $L_T$, the second service life parameter is represented as $L_M$, the third service life parameter is represented as $L_A$, and each of them is empirically multiplied by a weight coefficient to obtain the predicted service life which can be expressed as $L=0.5L_T+0.25L_M+0.25L_A$.

A method for predicting a service life of a superconducting magnet is provided according to an embodiment of the present disclosure. The method includes: acquiring temperature data of the superconducting magnet and determining a first service life parameter of the superconducting magnet based on the temperature data; acquiring magnetic field intensity data of the superconducting magnet and determining a second service life parameter of the superconducting magnet based on the magnetic field intensity data; acquiring air pressure data of the superconducting magnet and determining a third service life parameter of the superconducting magnet based on the air pressure data; and predicting the service life of the superconducting magnet based on the first service life parameter, the second service life parameter, and the third service life parameter. In the present disclosure, by acquiring parameters for predicting the service life of the superconducting magnet from different physical fields, an accurate prediction result can be obtained, and the method is applicable for predicting the service life of the superconducting magnet for the high-temperature superconducting electrodynamic suspension train in an offline state.

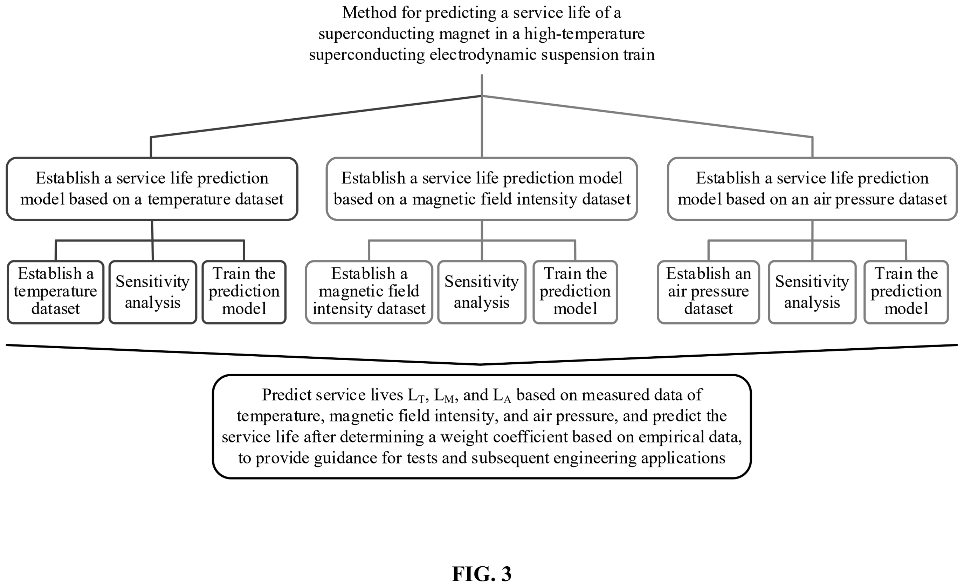

A process of predicting the service life based on data from various physical fields is described in detail as follows. Reference is made to FIG. 3, which is a schematic diagram of a method for predicting a service life of a superconducting magnet in a high-temperature superconducting electrodynamic suspension train according to an embodiment of the present disclosure. In this method, the service life $L_T$ is predicted through a service life prediction model established based on a temperature dataset, the service life $L_M$ is predicted through a service life prediction model established based on a magnetic field intensity dataset, the service life $L_A$ is predicted through a service life prediction model established based on an air pressure dataset, and the service life is predicted after the weight coefficients are determined based on empirical data, to provide guidance for tests and subsequent engineering applications. A process of establishing service life prediction models based on different types of datasets in an embodiment of the present disclosure is described in detail as follows.

In an embodiment, the method further includes: extracting the temperature data corresponding to the superconducting magnet from test data of the superconducting magnet and establishing a temperature dataset, where the temperature data is acquired to represent temperature variations over time during an entire process from a start to an end of an offline operation of the superconducting magnet; performing sensitivity analysis on the temperature data in the temperature dataset to determine an initial training sample set of the temperature data; normalizing the temperature data in the initial training sample set to obtain a target training sample set; and performing training based on the target training sample set to obtain a service life prediction model based on the temperature data. The determining a first service life parameter of the superconducting magnet based on the temperature data includes: processing the temperature data by using the service life prediction model based on the temperature data to obtain the first service life parameter.

Further, the performing sensitivity analysis on the temperature data in the temperature dataset to determine an initial training sample set of the temperature data includes: determining influence parameters of temperature data acquired at different positions at the same time instant in the temperature dataset on the service life of the superconducting magnet; determining a target temperature acquisition position based on the influence parameters; and determining the temperature data acquired at the target temperature acquisition position as the initial training sample set.

For example, based on a previous test result of the superconducting magnet, the temperature data related to the superconducting magnet is extracted to establish a temperature dataset, such as Ti{t1,t2,...,tn}, i=1,2,...,n. Then, sensitivity analysis is performed on data in the temperature dataset, and the temperature data with the highest correlation is determined as the initial training sample set. For example, four sets of temperature data with the highest correlation may be selected, which are represented as Ti{t1,t2,...,tn}, i=1,2,...,4. The data in the initial training sample set may be normalized by:

$$x_R^{'} = \frac{x_R - x_{R\min}}{x_{R\max} - x_{R\min}}$$

Where, $x_{Rmax}$ represents the maximum value in the temperature data, and $x_{Rmin}$ represents the minimum value in the temperature data. The target training sample set is obtained after normalization, such as Ttesti{t1,t2,...,tn}, i=1,2,...,4. The dataset is randomly divided into two mutually exclusive sets, which are a training set (70%) and a validation set (30%). In the embodiment of the present disclosure, the PSO-CNN multivariate regression training prediction model is used to train the temperature data with the highest correlation to obtain a service life prediction model. In addition, other model structures may be used for training, and the model structure is not limited in embodiments of the present disclosure.

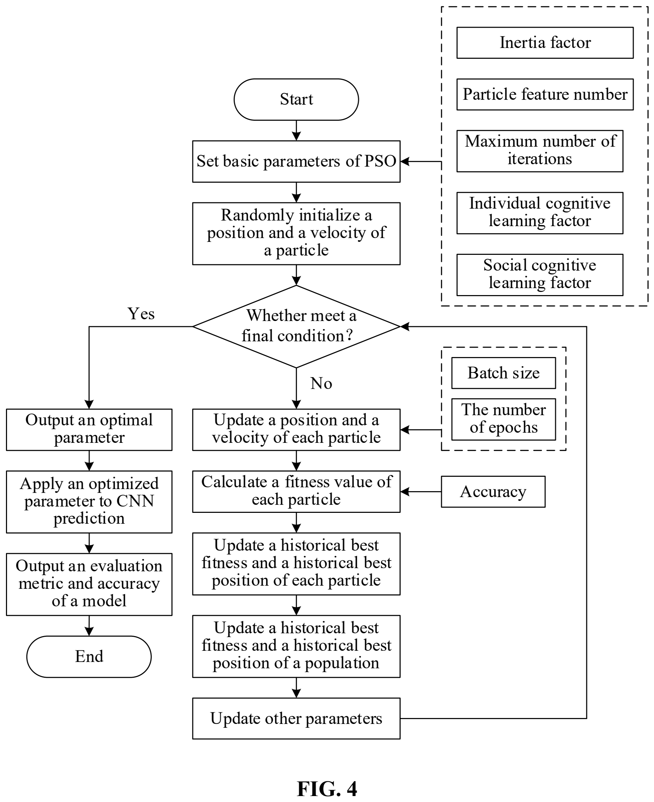

The PSO algorithm is an optimization algorithm developed by studying the foraging behavior of birds. A fundamental concept of the PSO algorithm originates from artificial life and evolutionary computation theory, seeking an optimal solution through collaboration and information sharing among individuals within a population. Before optimizing CNN parameters with the PSO algorithm, hyperparameters to be optimized are first determined. The determination of parameters is crucial for a model's performance. Two crucial parameters in the CNN model are determined for optimization, which are a batch size ($\lambda$) and the number of epochs ($\mu$). Taking these two parameters as optimization objects for the PSO algorithm, a process of determining CNN hyperparameters based on the PSO algorithm is shown in FIG. 4.

In the particle algorithm, five key parameters are to be determined, which are an inertia factor, a particle feature number, a maximum number of iterations, an individual cognitive learning factor, and a social cognitive learning factor. Specific settings of these parameters are shown in the table below:

| Parameter type | Parameter value |
| --- | --- |
| Inertia factor | 0.5 |
| Particle feature number | 5 |
| Maximum number of iterations | 5 |
| Individual cognitive learning factor | 2 |
| Social cognitive learning factor | 2 |

A CNN model with one input layer, four convolutional layers, two pooling layers, and one output layer is constructed. The output layer includes one neuron representing a predicted service life. The accuracy of the model is validated through temperature data obtained from previous tests. An error of a predicted service life $L_T$ is controlled within 95% to be qualified, otherwise iterative training is performed again.

In an embodiment, the method further includes: extracting the magnetic field intensity data corresponding to the superconducting magnet from test data of the superconducting magnet and establishing a magnetic field intensity dataset, where the magnetic field intensity data is acquired to represent variations of magnetic field intensity over time during an entire process from a start to an end of an offline operation of the superconducting magnet; performing sensitivity analysis on the magnetic field intensity data in the magnetic field intensity dataset to determine an initial training sample set of the magnetic field intensity data; normalizing the magnetic field intensity data in the initial training sample set to obtain a target training sample set; and performing training based on the target training sample set to obtain a service life prediction model based on the magnetic field intensity data. The determining a second service life parameter of the superconducting magnet based on the magnetic field intensity data includes: processing the magnetic field intensity data by using the service life prediction model based on the magnetic field intensity data to obtain the second service life parameter.

For example, based on a previous test result, the magnetic field intensity data of the superconducting magnet is extracted to establish a magnetic field intensity dataset Mi{m1,m2,...,mn}, i=1,2. Then, through sensitivity analysis, magnetic field data at several positions (such as four positions) with the greatest influence at different time instants are determined as the initial training sample set. Training samples are normalized by: $x_R^{'} = \dfrac{x_R - x_{R\min}}{x_{R\max} - x_{R\min}}$. Where, $x_{Rmax}$ represents the maximum value in the data, and $x_{Rmin}$ represents the minimum value in the data. After normalization, the target training sample set is obtained as Mtesti{m1,m2,...,mn}, i=1,2.

The magnetic field intensity data is trained by using the PSO-CNN regression training prediction model to obtain a service life prediction model. The accuracy of the model is validated through magnetic field intensity data obtained from previous tests. An error of a predicted service life $L_M$ is controlled within 95% to be qualified, otherwise iterative training is performed again.

Similarly, in an embodiment of the present disclosure, the method further includes: extracting the air pressure data corresponding to the superconducting magnet from test data of the superconducting magnet and establishing an air pressure dataset, where the air pressure data is acquired to represent variations of air pressure over time during an entire process from a start to an end of an offline operation of the superconducting magnet; performing sensitivity analysis on the air pressure data in the air pressure dataset to determine an initial training sample set of the air pressure data; normalizing the air pressure data in the initial training sample set to obtain a target training sample set; and performing training based on the target training sample set to obtain a service life prediction model based on the air pressure data. The determining a third service life parameter of the superconducting magnet based on the air pressure data includes: processing the air pressure data by using the service life prediction model based on the air pressure data to obtain the third service life parameter.

For example, based on a previous test result, the air pressure data of the superconducting magnet is extracted to establish an air pressure dataset Ai{a1,a2,...,an}, i=1,2. Then, sensitivity analysis and normalization are performed on the air pressure data to obtain a target training sample set. The normalization is performed by: $x_R^{'} = \dfrac{x_R - x_{R\min}}{x_{R\max} - x_{R\min}}$. Where, $x_{Rmax}$ represents the maximum value in the data, and $x_{Rmin}$ represents the minimum value in the data. After normalization, a training set is obtained as Atesti{a1,a2,...,an}, i=1,2.

The air pressure data is trained by using the PSO-CNN regression training prediction model, to obtain a service life prediction model. The accuracy of the model is validated through air pressure data obtained from previous tests. An error of a predicted service life $L_A$ is controlled within 95% to be qualified, otherwise iterative training is performed again.

Service lives $L_T$, $L_M$, and $L_A$ are predicted based on the measured data of temperature, magnetic field intensity, and air pressure, and they are empirically multiplied by respective weight coefficients to obtain the predicted service life $L=0.5L_T+0.25L_M+0.25L_A$, which provides guidance for tests and subsequent engineering applications.

When predicting the service life of the superconducting magnet in the high-temperature superconducting electrodynamic suspension train, conventional methods typically rely on the experience of engineers to predict the service life based on the temperature rise during a test, which cannot guarantee the accuracy of the prediction and cannot predict the service life of the superconducting magnet before the test. In a case that the predicted service life is undervalued, the capability of the superconducting magnet cannot be fully exerted. In a case that the predicted service life is excessive, quenching may occur during operation of the superconducting magnet. Therefore, a method for predicting a service life of a superconducting magnet in a high-temperature superconducting electrodynamic suspension train is provided according to the present disclosure. In this method, the parameters for predicting the service life of the superconducting magnet are acquired from different physical fields, to obtain an accurately-predicted service life, filling the research blank in methods for predicting the service life of the superconducting magnet for the high-temperature superconducting electrodynamic suspension train in an offline state.

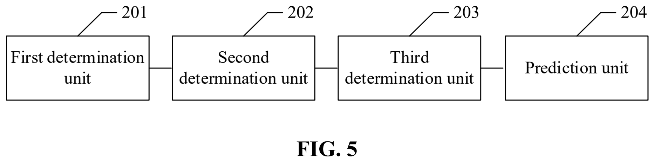

An apparatus for predicting a service life of a superconducting magnet is further provided according to an embodiment of the present disclosure. Referring to FIG. 5, the apparatus includes a first determination unit 201, a second determination unit 202, a third determination unit 203 and a prediction unit 204.

The first determination unit 201 is configured to acquire temperature data of the superconducting magnet and determine a first service life parameter of the superconducting magnet based on the temperature data.

The second determination unit 202 is configured to acquire magnetic field intensity data of the superconducting magnet and determine a second service life parameter of the superconducting magnet based on the magnetic field intensity data.

The third determination unit 203 is configured to acquire air pressure data of the superconducting magnet and determine a third service life parameter of the superconducting magnet based on the air pressure data.

The prediction unit 204 is configured to predict the service life of the superconducting magnet based on the first service life parameter, the second service life parameter, and the third service life parameter.

In an embodiment, the apparatus further includes a first model establishment unit. The first model establishment unit is configured to: extract the temperature data corresponding to the superconducting magnet from test data of the superconducting magnet and establish a temperature dataset, where the temperature data is acquired to represent temperature variations over time during an entire process from a start to an end of an offline operation of the superconducting magnet; perform sensitivity analysis on the temperature data in the temperature dataset to determine an initial training sample set of the temperature data; normalize the temperature data in the initial training sample set to obtain a target training sample set; and perform training based on the target training sample set to obtain a service life prediction model based on the temperature data. The first determination unit is further configured to process the temperature data by using the service life prediction model based on the temperature data to obtain the first service life parameter.

Further, the performing sensitivity analysis on the temperature data in the temperature dataset to determine an initial training sample set of the temperature data includes: determining influence parameters of the temperature data acquired at different positions at the same time instant in the temperature dataset on the service life of the superconducting magnet; and determining a target temperature acquisition position based on the influence parameters and determining the temperature data acquired at the target temperature acquisition position as the initial training sample set.

In an embodiment, the apparatus further includes a second model establishment unit. The second model establishment unit is configured to: extract the magnetic field intensity data corresponding to the superconducting magnet from test data of the superconducting magnet and establish a magnetic field intensity dataset, where the magnetic field intensity data is acquired to represent variations of magnetic field intensity over time during an entire process from a start to an end of an offline operation of the superconducting magnet; perform sensitivity analysis on the magnetic field intensity data in the magnetic field intensity dataset to determine an initial training sample set of the magnetic field intensity data; normalize the magnetic field intensity data in the initial training sample set to obtain a target training sample set; and perform training based on the target training sample set to obtain a service life prediction model based on the magnetic field intensity data. The second determination unit is further configured to process the magnetic field intensity data by using the service life prediction model based on the magnetic field intensity data to obtain the second service life parameter.

In an embodiment, the apparatus further includes a third model establishment unit. The third model establishment unit is configured to: extract the air pressure data corresponding to the superconducting magnet from test data of the superconducting magnet and establish an air pressure dataset, where the air pressure data is acquired to represent variations of air pressure over time during an entire process from a start to an end of an offline operation of the superconducting magnet; perform sensitivity analysis on the air pressure data in the air pressure dataset to determine an initial training sample set of the air pressure data; normalize the air pressure data in the initial training sample set to obtain a target training sample set; and perform training based on the target training sample set to obtain a service life prediction model based on the air pressure data. The third determination unit is further configured to: process the air pressure data by using the service life prediction model based on the air pressure data to obtain the third service life parameter.

In an embodiment, the prediction unit is further configured to: determine influence degree parameters of the temperature data, the magnetic field intensity data, and the air pressure data on the service life of the superconducting magnet; determine a weight coefficient based on the influence degree parameters; and calculate the first service life parameter, the second service life parameter and the third service life parameter by using the weight coefficient to obtain the service life of the superconducting magnet.

Based on the aforementioned embodiments, a computer-readable storage medium is provided according to an embodiment of the present disclosure. The computer-readable storage medium stores one or more programs. The one or more programs are executable by one or more processors to perform the method for predicting a service life of a superconducting magnet as described above.

An electronic device is further provided according to an embodiment of the present disclosure. The electronic device includes a memory, a processor, and a computer program stored in the memory and executable by the processor. The computer program, when executed by the processor, causes the processor to perform the method for predicting a service life of a superconducting magnet as described above.

Described above are only specific embodiments of the present disclosure, and the protection scope of the present disclosure is not limited thereto. Any modifications or substitutions that can be easily envisaged by those skilled in the art within the technical scope disclosed in the present disclosure shall be covered within the scope of the present disclosure. Therefore, the protection scope of the present disclosure should be subject to the protection scope defined by the claims.

The embodiments in the specification are described in a progressive manner, and each embodiment focuses on the difference from other embodiments. Same and similar parts in various embodiments may be referred to each other. Since apparatuses disclosed in embodiments correspond to the method disclosed in the embodiments, the description of the apparatuses is simple, and reference may be made to the relevant part of the methods.

The above description of the disclosed embodiments enables those skilled in the art to implement or use the present disclosure. Various modifications made to the embodiments are apparent to those skilled in the art. The general principle defined herein may be implemented in other embodiments without departing from the spirit and scope of the present disclosure. Therefore, the present disclosure should not be limited to the embodiments disclosed herein, but has the widest scope in accordance to the concept and the novel features disclosed herein.

**Claims**

1. A method for predicting a service life of a superconducting magnet, comprising:

   acquiring temperature data of the superconducting magnet and determining a first service life parameter of the superconducting magnet based on the temperature data;
   acquiring magnetic field intensity data of the superconducting magnet and determining a second service life parameter of the superconducting magnet based on the magnetic field intensity data;
   acquiring air pressure data of the superconducting magnet and determining a third service life parameter of the superconducting magnet based on the air pressure data; and
   predicting the service life of the superconducting magnet based on the first service life parameter, the second service life parameter, and the third service life parameter.

2. The method for predicting a service life of a superconducting magnet according to claim 1, further comprising:

   extracting the temperature data corresponding to the superconducting magnet from test data of the superconducting magnet and establishing a temperature dataset, wherein the temperature data is acquired to represent temperature variations over time during an entire process from a start to an end of an offline operation of the superconducting magnet;
   performing sensitivity analysis on the temperature data in the temperature dataset to determine an initial training sample set of the temperature data;
   normalizing the temperature data in the initial training sample set to obtain a target training sample set; and
   performing training based on the target training sample set to obtain a service life prediction model based on the temperature data,
   wherein the determining a first service life parameter of the superconducting magnet based on the temperature data comprises: processing the temperature data by using the service life prediction model based on the temperature data to obtain the first service life parameter.

3. The method for predicting a service life of a superconducting magnet according to claim 2, wherein the performing sensitivity analysis on the temperature data in the temperature dataset to determine an initial training sample set of the temperature data comprises:

   determining influence parameters of the temperature data acquired at different positions at the same time instant in the temperature dataset on the service life of the superconducting magnet; and
   determining a target temperature acquisition position based on the influence parameters, and determining the temperature data acquired at the target temperature acquisition position as the initial training sample set.

4. The method for predicting a service life of a superconducting magnet according to claim 1, further comprising:

   extracting the magnetic field intensity data corresponding to the superconducting magnet from test data of the superconducting magnet and establishing a magnetic field intensity dataset, wherein the magnetic field intensity data is acquired to represent variations of magnetic field intensity over time during an entire process from a start to an end of an offline operation of the superconducting magnet;
   performing sensitivity analysis on the magnetic field intensity data in the magnetic field intensity dataset to determine an initial training sample set of the magnetic field intensity data;
   normalizing the magnetic field intensity data in the initial training sample set to obtain a target training sample set; and
   performing training based on the target training sample set to obtain a service life prediction model based on the magnetic field intensity data,
   wherein the determining a second service life parameter of the superconducting magnet based on the magnetic field intensity data comprises: processing the magnetic field intensity data by using the service life prediction model based on the magnetic field intensity data to obtain the second service life parameter.

**5.** The method for predicting a service life of a superconducting magnet according to claim 1, further comprising:

extracting the air pressure data corresponding to the superconducting magnet from test data of the superconducting magnet and establishing an air pressure dataset, wherein the air pressure data is acquired to represent variations of air pressure over time during an entire process from a start to an end of an offline operation of the superconducting magnet;
performing sensitivity analysis on the air pressure data in the air pressure dataset to determine an initial training sample set for the air pressure data;
normalizing the air pressure data in the initial training sample set to obtain a target training sample set; and
performing training based on the target training sample set to obtain a service life prediction model based on the air pressure data,
wherein the determining a third service life parameter of the superconducting magnet based on the air pressure data comprises: processing the air pressure data by using the service life prediction model based on the air pressure data to obtain the third service life parameter.

**6.** The method for predicting a service life of a superconducting magnet according to claim 1, wherein the predicting the service life of the superconducting magnet based on the first service life parameter, the second service life parameter, and the third service life parameter comprises:

determining influence degree parameters of the temperature data, the magnetic field intensity data, and the air pressure data on the service life of the superconducting magnet;
determining a weight coefficient based on the influence degree parameters; and
calculating the first service life parameter, the second service life parameter, and the third service life parameter by using the weight coefficient, to obtain the service life of the superconducting magnet.

**7.** An apparatus for predicting a service life of a superconducting magnet, comprising:

a first determination unit, configured to acquire temperature data of the superconducting magnet and determine a first service life parameter of the superconducting magnet based on the temperature data;
a second determination unit, configured to acquire magnetic field intensity data of the superconducting magnet and determine a second service life parameter of the superconducting magnet based on the magnetic field intensity data;
a third determination unit, configured to acquire air pressure data of the superconducting magnet and determine a third service life parameter of the superconducting magnet based on the air pressure data; and
a prediction unit, configured to predict the service life of the superconducting magnet based on the first service life parameter, the second service life parameter, and the third service life parameter.

**8.** The apparatus for predicting a service life of a superconducting magnet according to claim 7, further comprising: a first model establishment unit, configured to:

extract the temperature data corresponding to the superconducting magnet from test data of the superconducting magnet and establish a temperature dataset, wherein the temperature data is acquired to represent temperature variations over time during an entire process from a start to an end of an offline operation of the superconducting magnet;
perform sensitivity analysis on the temperature data in the temperature dataset to determine an initial training sample set of the temperature data;
normalize the temperature data in the initial training sample set to obtain a target training sample set; and
perform training based on the target training sample set to obtain a service life prediction model based on the temperature data,
wherein the first determination unit is further configured to process the temperature data by using the service life prediction model based on the temperature data to obtain the first service life parameter.

**9.** The apparatus for predicting a service life of a superconducting magnet according to claim 1, further comprising: a second model establishment unit, configured to:

Extract the magnetic field intensity data corresponding to the superconducting magnet from test data of the superconducting magnet and establish a magnetic field intensity dataset, wherein the magnetic field intensity data is acquired to represent variations of magnetic field intensity over time during an entire process from a start to an end of an offline operation of the superconducting magnet;
perform sensitivity analysis on the magnetic field intensity data in the magnetic field intensity dataset to determine an initial training sample set of the magnetic field intensity data;
normalize the magnetic field intensity data in the initial training sample set to obtain a target training sample set; and
perform training based on the target training sample set to obtain a service life prediction model based on the magnetic field intensity data,
wherein the second determination unit is further configured to process the magnetic field intensity data by using the service life prediction model based on the magnetic field intensity data to obtain the second service life parameter.

10. The apparatus for predicting a service life of a superconducting magnet according to claim 7, further comprising: a third model establishment unit, configured to:

extract the air pressure data corresponding to the superconducting magnet from test data of the superconducting magnet and establish an air pressure dataset, wherein the air pressure data is acquired to represent variations of air pressure over time during an entire process from a start to an end of an offline operation of the superconducting magnet;
perform sensitivity analysis on the air pressure data in the air pressure dataset to determine an initial training sample set of the air pressure data;
normalize the air pressure data in the initial training sample set to obtain a target training sample set; and
perform training based on the target training sample set to obtain a service life prediction model based on the air pressure data,
wherein the third determination unit is further configured to:
process the air pressure data by using the service life prediction model based on the air pressure data to obtain the third service life parameter.

Acquire temperature data of a superconducting magnet and determine a first service life parameter of the superconducting magnet based on the temperature data

S101

Acquire magnetic field intensity data of the superconducting magnet and determine a second service life parameter of the superconducting magnet based on the magnetic field intensity data

S102

Acquire air pressure data of the superconducting magnet and determine a third service life parameter of the superconducting magnet based on the air pressure data

S103

Predict the service life of the superconducting magnet based on the first service life parameter, the second service life parameter, and the third service life parameter

S104

**FIG. 1**

**FIG. 2**

Method for predicting a service life of a superconducting magnet in a high-temperature superconducting electrodynamic suspension train

Establish a service life prediction model based on a temperature dataset

Establish a service life prediction model based on a magnetic field intensity dataset

Establish a service life prediction model based on an air pressure dataset

Establish a temperature dataset

Sensitivity analysis

Train the prediction model

Establish a magnetic field intensity dataset

Sensitivity analysis

Train the prediction model

Establish an air pressure dataset

Sensitivity analysis

Train the prediction model

Predict service lives $L_T$, $L_M$, and $L_A$ based on measured data of temperature, magnetic field intensity, and air pressure, and predict the service life after determining a weight coefficient based on empirical data, to provide guidance for tests and subsequent engineering applications

**FIG. 3**

**FIG. 4**

201 202 203 204

| First determination unit | Second determination unit | Third determination unit | Prediction unit |
|---|---|---|---|

**FIG. 5**

## INTERNATIONAL SEARCH REPORT

| International application No. |
|---|
| **PCT/CN2024/096053** |

| A. | CLASSIFICATION OF SUBJECT MATTER |
|---|---|

G06F30/27(2020.01)i; G06F18/214(2023.01)n; G06F119/04(2020.01)n

According to International Patent Classification (IPC) or to both national classification and IPC

| B. | FIELDS SEARCHED |
|---|---|

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC, IEEE, 百度学术, BAIDU SCHOLAR: 超导, 磁体, 磁悬浮, 温度, 磁场, 气压, 权值, 权重, 系数, 因子, 时长, 寿命, 预测, 确定, 参数, superconductor, magnet, life, temperature, magnetic field, pressure, predict, parameter, weight, time

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117556704 A (CRRC CHANGCHUN RAILWAY VEHICLES CO., LTD.) 13 February 2024 (2024-02-13)<br>claims 1-10, description, paragraphs 1-144, and figures 1-5 | 1-10 |
| A | US 2019267799 A1 (VARIAN SEMICONDUCTOR EQUIPMENT ASS INC.) 29 August 2019 (2019-08-29)<br>description, paragraphs 2-46, and figures 1-7 | 1-10 |
| A | CN 115640650 A (CRRC CHANGCHUN RAILWAY VEHICLES CO., LTD.) 24 January 2023 (2023-01-24)<br>entire document | 1-10 |
| A | CN 115796059 A (POWERCHINA SEPCO1 ELECTRIC POWER CONSTRUCTION CO., LTD.) 14 March 2023 (2023-03-14)<br>entire document | 1-10 |
| A | CN 116976083 A (JIANGXI LIANCHUANG OPTOELECTRONIC SUPERCONDUCTING APPLICATION CO., LTD.) 31 October 2023 (2023-10-31)<br>entire document | 1-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 July 2024** | **02 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/096053**

### C.    DOCUMENTS CONSIDERED TO BE RELEVANT

| Category* | Citation of document, with indication, where appropriate, of the relevant passages | Relevant to claim No. |
|---|---|---|
| A | CN 114019371 A (SHANGHAI JIAO TONG UNIVERSITY) 08 February 2022 (2022-02-08) entire document | 1-10 |
| A | CN 114925535 A (BEIHANG UNIVERSITY et al.) 19 August 2022 (2022-08-19) entire document | 1-10 |
| A | US 6838964 B1 (GE MEDICAL TECHNOLOGY SERVICES, INC.) 04 January 2005 (2005-01-04) entire document | 1-10 |

Form PCT/ISA/210 (second sheet) (July 2022)

**INTERNATIONAL SEARCH REPORT**
Information on patent family members

International application No.

**PCT/CN2024/096053**

| Patent document cited in search report | | | Publication date (day/month/year) | Patent family member(s) | | | Publication date (day/month/year) |
|---|---|---|---|---|---|---|---|
| CN | 117556704 | A | 13 February 2024 | None | | | |
| US | 2019267799 | A1 | 29 August 2019 | US | 10971926 | B2 | 06 April 2021 |
| CN | 115640650 | A | 24 January 2023 | WO | 2024051618 | A1 | 14 March 2024 |
| CN | 115796059 | A | 14 March 2023 | CN | 115796059 | B | 20 June 2023 |
| CN | 116976083 | A | 31 October 2023 | None | | | |
| CN | 114019371 | A | 08 February 2022 | CN | 114019371 | B | 16 June 2023 |
| CN | 114925535 | A | 19 August 2022 | None | | | |
| US | 6838964 | B1 | 04 January 2005 | None | | | |

Form PCT/ISA/210 (patent family annex) (July 2022)

**EP 4 700 637 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311575649